# EUROPEAN PATENT SPECIFICATION

(11) **EP 2 218 332 B1**
(45) Date of publication and mention of the grant of the patent: **31.08.2011**
(21) Application number: 10382006.4
(22) Date of filing: 14.01.2010
(51) Int. Cl.: A22C 11/12, A22C 11/00

(54) **Process for removing meat remains in tails of recently clipped sausages and device for the performance thereof**
Verfahren zum Entfernen von Fleischresten in den Enden von frisch abgetrennten Würstchen und Vorrichtung zur dessen Durchführung
Procédé pour éliminer les résidus de viande des queues de saucisses qui viennent d'être sectionnées et dispositif pour la réalisation de ce procédé

(30) Priority: 11.02.2009 ES 200900383
(43) Date of publication of application: 18.08.2010
(73) Proprietor: Lorenzo Noguera, Sagar, 08310 Argentona (ES)
(72) Inventor: Lorenzo Noguera, Sagar, 08310 Argentona (ES)
(74) Representative: Sugrañes Patentes y Marcas

(56) References cited:
- EP-A1- 0 507 374
- US-A1- 2008 014 847

## Description

### Technical Field of the Invention.-

The present invention relates to a process for removing meat remains in outer tails of recently clipped sausages, particularly by means of clipping machines for sausage ends.

The invention also relates to a device for the performance of the process of the invention.

### Background of the Invention.-

One of the most modernly used techniques in the sector dedicated to manufacturing sausages for the closing thereof consists of clipping their ends by means of metal clips. This technique allows reaching large productions and enables the automation of the operation for closing sausage casings.

One of the problems of this technique, however, consists of the fact that an open space of a few millimeters must be left between the actual end of the sausage casing and the closing clip, so that the clip is well secured and, furthermore, to allow an operation for cutting the casing to the desired length of each sausage piece. This casing space of a few millimeters between the clip and the open end of the casing, which in the slang of the technique is called tail, is inevitably full of meat after the cutting of the casing, it being necessary to remove said meat mainly due to health and hygiene reasons, since in contact with air the meat contained in the tail would quickly decompose and deteriorate.

There are already clipping machines for sausage casings, such as disclosed in EP 0 507 374, which perform said removal by means of mechanisms which squeeze the tail and shift towards the outside in the longitudinal direction of the sausage piece, dragging the meat outside the tail. But such type of machine has a great operational complication and is very expensive.

Published patent application US 20080014847 A1, for example, can be mentioned, which describes a mechanism which, before the closing of the clip and of the cutting of the casing to separate the recently made sausage piece, carries out a stretching of the casing in a direction longitudinal thereto, which forces considerably increasing the length of the clipping machine compared to that of conventional machines and greatly complicates its operation, since it is a complex mechanism with more probabilities of experiencing breakdowns.

### Disclosure of the Invention.-

The process and the device object of the invention eliminate all the mentioned drawbacks, are easy to execute and perform. Particularly, the device has a reduced size and a low cost compared to already existing conventional machines.

The process of the invention is essentially characterized in that it comprises the steps of clamping the tail of the recently clipped sausage by means of the closing of pinching means on the tail; of shifting the pinching means in a direction transverse to the tail, in the clamping position, until the tail escapes from between the pinching means; and of making the pinching means return to their initial inoperative position.

In turn, the device for the performance of the process object of the invention is characterized in that the pinching means are formed by a pair of complementary levers which, from an initial inoperative position in which they are separated, are shiftable in a plane parallel and juxtaposed to the shifting of the closing punch of the clip, said levers being provided with a first mutual approaching movement, at the end of which they clamp the casing by the area of the tail immediately adjacent to the recently closed clip, and with a second joint shifting movement with respect to said clip, in which they keep the tail of the sausage clamped and make it shift in turn in its entire length between the levers, thus removing from the inside of the tail the meat remains contained therein; and in that there are arranged retaining means suitable for retaining the clip against the closing die while the mentioned shifts of the pair of levers take place.

According to another feature of the invention, said retaining means are formed by the actual closing punch of the clip, which remains immobile in the closing position during the shifts of the pair of levers.

According to another feature of the invention, the mentioned levers are arranged rotating about respective fixed articulated support points of the clipping machine and their respective power arms are subjected to the action of corresponding pneumatic cylinders.

### Brief Description of the Drawings.-

The attached drawings show, by way of a non-limiting example, an embodiment of the device for carrying out the process object of the invention. In said drawings:
Figures 1 to 4 shows respective schematic and front elevational sequential views of the operation of the pair of levers of the invention; and
Figures 5 to 8 are also schematic but side elevational and partially sectioned views corresponding to the positions of the levers illustrated in Figures 1 to 4.

### Detailed Description of the Drawings.-

In said drawings it can be seen that the device in question comprises pinching means which are formed by a pair of complementary levers 1 and 2, rotating about respective fixed and articulated support points 10 and 11 of the frame of the clipping machine in which the device is assembled.

The levers 1 and 2 shift, in their rotating movements, in a plane parallel and juxtaposed to that of the shifting of the closing punch 3 of the clip 4 on the casing 5 of the sausage 7.

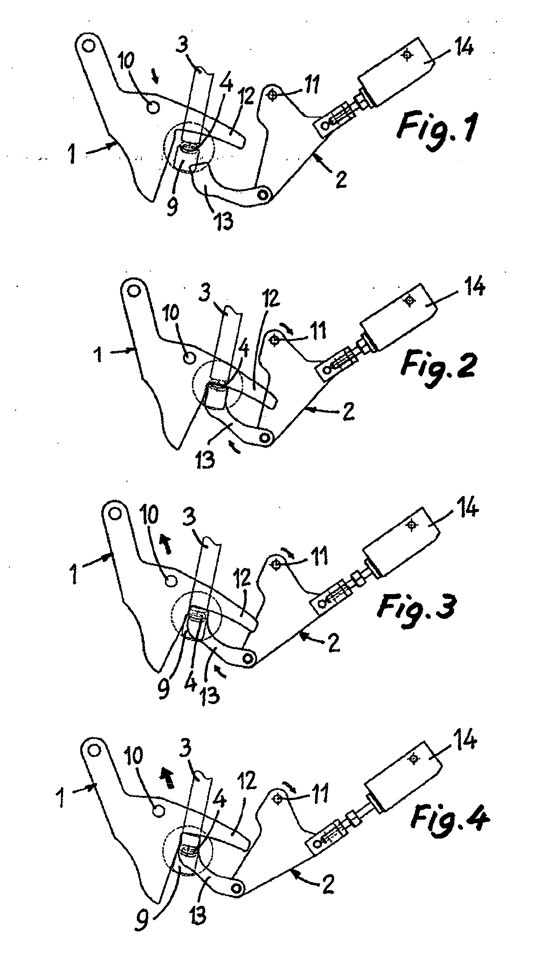

At the end of a first mutual approaching movement between respective clamp arms 12 and 13 with which the levers 1 and 2 are provided, said arms 12 and 13 clamp the casing 5 by the area of the tail 6 of the sausage 7 immediately adjacent to the recently closed clip 4. It can be observed in Figures 1 to 4 that the mentioned clamp arm 13 is assembled articulated in an end of the lever 2.

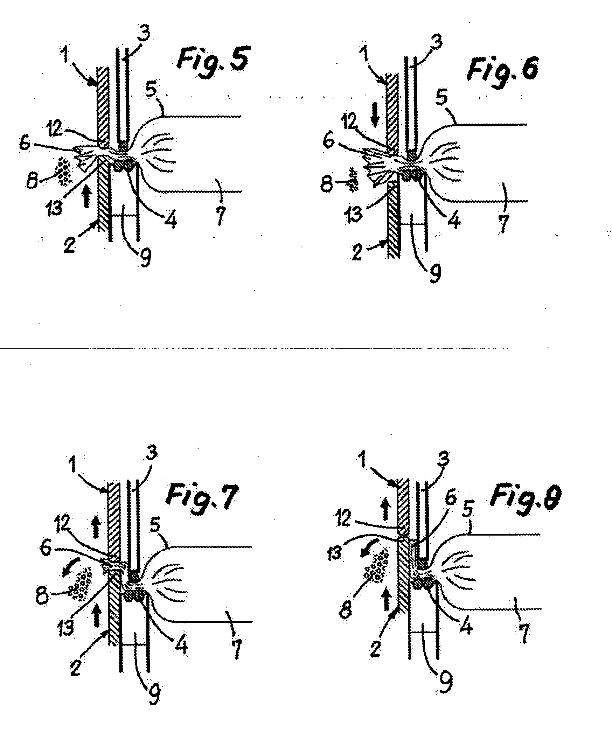

Then, both levers 1 and 2 perform a second joint shifting movement with respect to said clip 4, which is retained against the closing die 9 during the second movement by retaining means, which in the depicted case are formed by the actual closing punch 3. In said second joint shifting movement, both levers 1 and 2 keep the tail 6 clamped between their clamp arms 12 and 13. The tail 6 is forced to pass in its entire length between the clamping performed by the clamp arms 12 and 13, the meat remains 8 contained in the tail 6 thus being removed from the inside of such tail 6, as can be schematically seen in Figures 5 to 8.

The lever 1 is already arranged in some types of clipping machines for sausages, in which case the incorporation of the second lever 2 is quick and easy. Likewise, the incorporation of the assembly of the two levers 1 and 2 in those clipping machines which lack both of them is relatively simple and inexpensive.

The drive of the levers 1 and 2 is preferably performed by means of pneumatic cylinders, of which only the drive cylinder 14 of the lever 2 has been depicted in the drawings.

## Claims

1. A process for removing meat remains in tails of clipped sausages, to be carried out in clipping machines for sausage ends, **characterized in that** it comprises the steps of clamping the tail of the recently clipped sausage by means of the closing of pinching means on the tail; of shifting the pinching means in a direction transverse to the tail, in the clamping position, until the tail escapes from between the pinching means; and of making the pinching means return to their initial inoperative position.

2. A device for the performance of the process of claim 1, **characterized in that** the pinching means are formed by a pair of complementary levers (1, 2) which, from an initial inoperative position in which they are separated, are shiftable in a plane parallel and juxtaposed to the shifting of the closing punch (3) of the clip (4), said levers being provided with a first mutual approaching movement, at the end of which they clamp the casing (5) by the area of the tail (6) of the sausage (7) immediately adjacent to the recently closed clip, and with a second joint shifting movement with respect to said clip, in which they keep the tail of the sausage clamped and make it shift in turn in its entire length between the levers, thus removing from the inside of the tail the meat remains (8) contained therein; and **in that** there are arranged retaining means suitable for retaining the clip against the closing die (9) while the mentioned shifts of the pair of levers take place.

3. The device according to claim 2, **characterized in that** said retaining means are formed by the actual closing punch (3) of the clip (4), which remains immobile in the closing position during the shifts of the pair of levers (1, 2).

4. The device according to any one of claims 2 and 3, **characterized in that** the mentioned levers (1, 2) are arranged rotating about respective fixed articulated support points (10, 11) of the clipping machine and their respective power arms (12, 13) are subjected to the action of corresponding pneumatic cylinders (14).

## Patentansprüche

1. Verfahren zur Entfernung von Fleischresten an den Zipfeln von geclippten Wurstwaren, welches in Clippern für Wurstwarenenden durchzuführen ist, **dadurch gekennzeichnet, dass** es folgende Schritte umfasst: Befestigen des Zipfels der gerade geclippten Wurstware durch Schließen von Klemmmitteln an den Zipfel; Verlagern der Klemmmittel in eine zum Zipfel transversalen Richtung, in Befestigungsstellung, bis der Zipfel zwischen die Klemmmitteln rauskommt; und Zurückkehren der Klemmmittel zu deren unwirksamen Ausgangsstellung.

2. Vorrichtung zur Durchführung des Verfahrens nach Anspruch 1, **dadurch gekennzeichnet, dass** die Klemmmittel aus einem Paar von ergänzenden Hebeln (1, 2) gebildet sind, welche, ausgehend von einer unwirksamen Ausgangsstellung, in welche sie getrennt sind, auf eine parallele und zur Verlagerungsebene des Stempels (3) des Clips (4) nebeneinandergestellte Ebene verlagerbar sind, wobei die genannten Hebeln mit einer ersten Annäherungsbewegung versehen sind, wobei am Schluss derselben diese die Hülle (5) am Bereich des Zipfels (6) der Wurstware (7) befestigen, der unmittelbar an den gerade geschlossenen Clip anliegt, und mit einer zweiten gemeinsamen Verlagerungsbewegung in Bezug auf den genannten Clip, in welche diese den Zipfel der Wurstware befestigt halten und gleichzeitig die Verlagerung desselben entlang seiner ganzen Länge zwischen die Hebel verursachen, wobei auf diese Weise von Inneren des Zipfels die Fleischreste (8) entfernt werden, welche sich darin befinden; und dass Haltemittel angeordnet sind, welche dafür geeignet sind, den Clip gegen die Form (9) zu halten, während die genannten Verlagerungen der Hebelpaare stattfinden.

3. Vorrichtung nach Anspruch 2, **dadurch gekennzeichnet, dass** die genannten Haltemittel durch den eigenen Stempel (3) des Clips (4) gebildet sind, welcher bei den Verlagerungen des Hebelpaars (1, 2) in der Schließstellung ortsfest bleibt.

4. Vorrichtung nach einem der Ansprüche 2 und 3, **dadurch gekennzeichnet, dass** die genannten Hebel (1, 2) so angeordnet sind, dass sie um jeweilige feste gelenkige Stützpunkte (10, 11) des Clippers drehbar sind und ihre jeweilige Kraftarme (12, 13) der Wirkung von entsprechenden pneumatischen Zylindern (14) ausgesetzt sind.

## Revendications

1. Procédé pour retirer les résidus de viande en queues des saucisses clippées, à mettre en place sur les clippeuses pour les extrémités des saucisses, **caractérisé en ce qu'**il comprend les étapes de serrer la queue de la saucisse dernièrement clippée au moyen de la fermeture des moyens de pincement sur la queue; de déplacer les moyens de pincement dans une direction transversale par rapport à la queue, dans la position de serrage, jusqu'à ce que la queue s'échappe des moyens de pincement; et de faire revenir les moyens de pincement à leur position inopérante initiale.

2. Dispositif pour l'exécution du procédé de la revendication 1, **caractérisé en ce que** les moyens de pincement sont formés d'une paire de leviers (1, 2) complémentaires, lesquels, depuis une position inopérante initiale dans laquelle ils sont séparés, peuvent être déplacés sur un plan parallèle et juxtaposé au déplacement du poinçon (3) de fermeture du clip (4), lesdits leviers étant animés d'un premier mouvement d'approche mutuel, à la fin duquel ils serrent le boyau (5) par la zone de la queue (6) de la saucisse (7) immédiatement adjacent au clip dernièrement fermé, et d'un second mouvement de déplacement commun par rapport audit clip, dans lequel ils gardent la queue de la saucisse serrée et la déplacent à son tour sur toute sa longueur entre les leviers, retirant ainsi de l'intérieur de la queue les résidus de viande (8) contenus à l'intérieur de celle-ci; et **en ce que** il y a des moyens de rétention agencés aptes à retenir le clip contre la matrice de fermeture (9) pendant que les déplacements mentionnés de la paire de leviers ont lieu.

3. Dispositif selon la revendication 2, **caractérisé en ce que** lesdits moyens de rétention sont formés du poinçon (3) de fermeture lui-même du clip (4), lequel reste immobile dans la position de fermeture pendant les déplacements de la paire de leviers (1, 2).

4. Dispositif selon l'une quelconque des revendications 2 et 3, **caractérisé en ce que** les leviers (1, 2) mentionnés sont montés rotatifs sur des points (10, 11) de support articulés fixes respectifs de la clippeuse et leur bras (12, 13) de force respectifs sont soumis à l'action des vérins (14) pneumatiques correspondants.
